# EUROPÄISCHE PATENTSCHRIFT

(11) **EP 2 744 986 B1**
(45) Veröffentlichungstag und Bekanntmachung des Hinweises auf die Patenterteilung: **07.03.2018**
(21) Anmeldenummer: 12741001.7
(22) Anmeldetag: 01.08.2012
(51) Int. Cl.: F01L 1/047, F01L 1/34, F01L 1/344

(54) **VERSTELLBARE NOCKENWELLENANORDNUNG**
ADJUSTABLE CAMSHAFT ARRANGEMENT
SYSTEME D'ARBRE A CAMES AJUSTABLE

(30) Priorität: 18.08.2011 DE 102011052822
(43) Veröffentlichungstag der Anmeldung: 25.06.2014
(73) Patentinhaber: ThyssenKrupp Presta TecCenter AG, 9492 Eschen (LI)
(72) Erfinder: KUNZ, Michael, 08132 Mülsen (DE); MANN, Bernd, 09405 Zschopau (DE); MELZER, Markus, 09235 Burkhardtsdorf (DE); MEUSEL, Jürgen, 09573 Dittmannsdorf (DE)
(74) Vertreter: Lorenz, Bernd Ingo Thaddeus
(86) Internationale Anmeldenummer: PCT/EP2012/065036
(87) Internationale Veröffentlichungsnummer: WO 2013/023921

(56) Entgegenhaltungen:
- DE-A1-102005 062 207
- DE-A1-102007 017 514
- DE-A1-102008 019 747
- DE-A1-102009 048 621
- DE-C1- 3 943 426
- US-A1- 2005 235 939

## Beschreibung

Die Erfindung betrifft eine Nockenwelle, insbesondere für Kraftfahrzeugmotoren, mit einer ersten Welle und einer zweiten Welle, die eine hohle Außenwelle und eine koaxial in der Außenwelle angeordnete und gegenüber der Außenwelle verdrehbare Innenwelle bilden, mit ersten an der Außenwelle drehfest angeordneten Nocken und mit zweiten Nocken, die drehbar auf der Außenwelle angeordnet und an der Innenwelle befestigt sind. Im Rahmen der Erfindung kann je nach Ausgestaltung die erste Welle die Außenwelle oder die Innenwelle sein, wobei dann die zweite Welle entsprechend die Innenwelle bzw. Außenwelle ist.

Durch eine Verstellung der ersten Nocken gegenüber den zweiten Nocken ist eine variable Steuerung der Ventile eines Verbrennungsmotors möglich. So kann beispielsweise last- und drehzahlabhängig das Verhältnis von Einlasszeit und Auslasszeit verändert werden, wobei die Einlassventile einerseits und die Auslassventile andererseits mit den gegeneinander verstellbaren Gruppen von Nocken betätigt werden. Die Verdrehung von Innenwelle und Außenwelle erfolgt üblicherweise durch Verstelleinrichtungen, die auch als Phaser bezeichnet werden.

Um eine präzise Positionierung der Nocken sowie gleichzeitig eine leichte Verstellbarkeit der Innenwelle zu der Außenwelle zu ermöglichen, müssen die beiden Wellen in geeigneter Weise verdrehbar zueinander gelagert sein. So ist es bei einer gattungsgemäßen Nockenwelle mit den eingangs beschriebenen Merkmalen gemäß der DE 39 43 426 C1 bekannt, an den Enden der ineinander liegenden Wellenelemente Lagerhülsen vorzusehen, welche neben einer radialen Lagerung auch eine axiale Fixierung bewirken. Es ergibt sich der Nachteil, dass die axiale Lagerung durch voneinander getrennte, weit beabstandete Elemente bereitgestellt wird, weshalb neben einem erhöhten Fertigungsaufwand auch die erhöhte Gefahr einer Fehlfunktion besteht. Für eine präzise axiale Lagerung ist es auch von Vorteil, wenn an den Abstützungsflächen formstabile Materialien vorgesehen sind, die vorzugsweise auch einen ähnlichen Temperaturausdehnungskoeffizienten aufweisen. Eine axiale Abstützung über weiche Dichtungen oder dergleichen ist in der Regel nicht ausreichend.

DE 102007017514 A1 betrifft eine verstellbare Nockenwelle, mit einer koaxial in einer Außenwelle angeordneten Innenwelle, wobei die Außenwelle und die Innenwelle relativ zueinander verdrehbar gelagert sind, und mit zumindest einer auf ein Längsende der Nockenwelle montierbaren Phasenstelleinrichtung, die eine Phasenlage der Innen- und der Außenwelle relativ zueinander und/oder zu einem Antrieb verstellt. Dabei weist die Phasenstelleinrichtung eine Anschlageinrichtung mit zumindest einem ersten Axialanschlag für die Außenwelle auf. An der Anschlageinrichtung oder an der Phasenstelleinrichtung ist zumindest ein zweiter Axialanschlag für die Innenwelle vorgesehen, wobei die Anschlageinrichtung allein oder zusammen mit der Phasenstelleinrichtung die Innenwelle zur Außenwelle axial fixiert.

Vor diesem Hintergrund liegt der Erfindung die Aufgabe zugrunde, eine verstellbare Nockenwelle mit einer Innenwelle und einer Außenwelle anzugeben, bei der auf einfache Weise eine präzise und zuverlässige Lagerung in axialer Richtung verwirklicht ist.

Ausgehend von einer Nockenwelle mit den eingangs beschriebenen Merkmalen wird die Aufgabe erfindungsgemäß dadurch gelöst, dass die erste Welle und die zweite Welle in axialer Richtung durch eine Formschlussausformung gegeneinander abgestützt sind, wobei die erste Welle in axialer Richtung gesehen auf der einen Seite der Formschlussausformung eine erste Kontaktfläche und auf der anderen Seite der Formschlussausformung eine zweite Kontaktfläche zur drehbeweglichen Abstützung der zweiten Welle über die Formschlussausformung aufweist. Im Rahmen der Erfindung wird als Welle nicht nur ein rohr- oder stabförmiger Grundkörper, sondern auch eine aus mehreren drehfest miteinander verbundenen Teilen gebildete Einheit verstanden. Die Formschlussausformung kann je nach Ausgestaltung zur gleitenden sowie zur rollenden Lagerung nach Art eines Wälzlagers vorgesehen sein, wobei dann zweckmäßigerweise mehrere voneinander separate Formschlussausformungen vorgesehen sind.

Gemäß einem Teil der erfindungsgemäßen Ausführungsformen ist die Stützstelle zur axialen Abstützung von Innenwelle und Außenwelle an einem der Wellenenden vorgesehen. Die Formschlussausformung ist dann üblicherweise Bestandteil der zweiten Welle, so dass die Formschlussausformung als Bestandteil der zweiten Welle mit den in axialer Richtung an beiden Seiten anschließenden Kontaktflächen der ersten Welle zusammenwirkt. Im Rahmen einer solchen Betrachtung ist die Zuordnung der ersten Welle und der zweiten Welle zu der Außenwelle und der Innenwelle noch nicht festgelegt.

Gemäß einer bevorzugten Weiterbildung ist davon ausgehend vorgesehen, dass sich die Innenwelle an einem Nockenwellenende über einen rohrförmigen Grundkörper der Außenwelle hinauserstreckt und dort die Formschlussausformung aufweist, die über den Innendurchmesser des Grundkörpers der Außenwelle in radialer Richtung vorsteht.

Im Rahmen der beschriebenen Ausgestaltung ergibt sich eine besonders einfache Konstruktion, wenn sich die Formschlussausformung, beispielsweise ein umlaufender, ringförmiger Vorsprung, an der einen Seite an einer Stirnfläche des rohrförmigen Grundkörpers der Außenwelle abstützt, wobei dann die zweite Kontaktfläche von einem axialfest mit dem Grundkörper verbundenen Teil der Außenwelle bereitgestellt wird. Ein solches Teil kann beispielsweise mit einer Durchmessererweiterung von außen auf den Grundkörper aufgesetzt und in geeigneter Weise befestigt werden.

Bei einer solchen Vorgehensweise ergibt sich auch der Vorteil, dass dieses Teil, welches grundsätzlich auch ein Funktionselement der Nockenwelle sein kann, bei der Montage mit einer Kraft axial auf den Grundkörper aufgeschoben wird, bei der einerseits ein minimales Spiel und andererseits auch noch eine ausreichende Drehbarkeit ohne Klemmen ermöglicht werden.

Im Rahmen der Erfindung ist es von Vorteil, wenn die zur axialen Lagerung zusammenwirkenden Flächen, das heißt die beiden Kontaktflächen sowie die zugeordneten Flächen der Formschlussausformung, mit einer Oberflächenvergütung versehen sind. Neben einem Feinschleifen kommen zusätzlich oder alternativ auch eine Verhärtung, eine Beschichtung oder dergleichen in Betracht.

Gemäß einer alternativen weiteren Ausgestaltung der Erfindung ist die Formschlussausformung als Bestandteil der Innenwelle in axialer Richtung gesehen an beiden Seiten an gegenüberliegenden Kontaktflächen eines axialfest mit dem Grundkörper verbundenen Teils oder an Kontaktflächen von zwei mit dem Grundkörper verbundenen Teilen der Außenwelle abgestützt. Insbesondere kann vorgesehen sein, dass sich die Formschlussausformung auf der einen Seite an einem Teil abstützt, welches auch ein Funktionselement der Nockenwelle ist, während auf der anderen Seite zum axialen Abschluss ein einfacher Endring in dieses Funktionselement eingesetzt ist.

Wenn die Formschlussausformung als radialer Vorsprung der Innenwelle ausgebildet ist, kann diese Formschlussausformung entweder an einem rohr- oder stabförmigen Innenwellengrundkörper oder an einem mit dem Innenwellengrundkörper verbundenen Teil gebildet sein. Die Erzeugung der Formschlussausformung an dem stabförmigen Innenwellengrundkörper ist beispielsweise bei einem Gieß- oder Schmiedeverfahren möglich. Darüber hinaus kann die Formschlussausformung auch durch eine spanabhebende Bearbeitung, beispielsweise ein Drehen, erzeugt werden. Wenn gemäß der weiteren beschriebenen Alternative die Formschlussausformung von einem separaten, mit dem Innenwellengrundkörper wenigstens axialfest verbundenen Teil gebildet ist, ergibt sich der Vorteil, dass der Innenwellengrundkörper selbst sehr einfach als gerade verlaufender Stab, als Rohr oder dergleichen ausgeführt sein kann, wobei dann auch eine besonders kostengünstige und einfache Herstellung des Innenwellengrundkörpers möglich ist.

Wenn die Formschlussausformung der Innenwelle gemäß der zuvor beschriebenen besonders einfachen Ausgestaltung zwischen der Stirnfläche des Grundkörpers der Außenwelle sowie einem axialfest mit dem Grundkörper verbundenen Teil angeordnet ist, kann dieses Teil auch als Hülse ausgeführt sein.

Bei den zuvor beschriebenen erfindungsgemäßen Varianten erfolgt die Abstützung im Bereich eines Wellenendes. Ein alternatives, erfindungsgemäßes Konzept ermöglicht dagegen die axiale Abstützung an einer beliebigen Position der Nockenwelle. Gemäß diesem alternativen, erfindungsgemäßen Konzept ist vorgesehen, dass die Innenwelle und die Außenwelle an einer Stützstelle, ausgehend von einem Ringspalt zwischen Innenwelle und Außenwelle, jeweils eine zurückspringende Kontur in Form einer Vertiefung, Nut oder Öffnung aufweisen, wobei als Formschlussausformung zumindest ein in diese zurückspringenden Konturen eingreifendes, separates Formschlusselement vorgesehen ist.

Das Formschlusselement kann an der Innenwelle oder Außenwelle befestigt sein. Auch wenn die Außenwelle und die Innenwelle aus mehreren fest miteinander verbundenen Teilen gebildet werden können, wird im Rahmen der Erfindung das Formschlusselement auch bei einer festen Verbindung mit einer der Wellen als separates Element betrachtet, welches in der Regel ausschließlich der axialen Abstützung dient.

Gemäß einer ersten Variante dieses alternativen Konzeptes ist vorgesehen, dass an der Stützstelle die Außenwelle zumindest eine Öffnung und die Innenwelle eine Nut aufweist, wobei zumindest ein Formschlusselement in die Öffnung eingesetzt ist und in die Nut eingreift. Im Rahmen einer solchen Ausgestaltung kann das Formschlusselement nachträglich eingesetzt werden, wobei dann eine Fixierung des Formschlusselementes an der Innenwelle oder der Außenwelle möglich ist. Das Formschlusselement kann beispielsweise als flaches Plättchen nach Art eines Nutensteins ausgeführt sein, wobei jedoch eine gewisse Sicherung dieses Formschlusselementes vorzusehen ist. Das Formschlusselement kann dabei an der Innenwelle oder der Außenwelle befestigt sein, wobei dann die jeweils andere Welle die in axialer Richtung wirkenden Kontaktflächen an beiden Seiten des Formschlusselements bereitstellen.

Um eine gleichmäßige Abstützung zu erreichen, sind vorzugsweise mehrere Formschlusselemente um den Umfang verteilt angeordnet.

Wenn die Außenwelle mit einer in radialer Richtung durchgehenden Öffnung versehen ist, kann dieser Bereich auch mit einem Ring abgedeckt werden. Der Ring kann als Schutz vor mechanischen Beschädigungen und Verunreinigungen vorgesehen sein. Des Weiteren wird durch einen Ring vermieden, dass große Mengen von Öl durch die Öffnung der Außenwelle austreten können. Insbesondere ist es im Rahmen der Erfindung möglich, dass der Ringspalt zwischen Innenwelle und Außenwelle mit Öl beaufschlagt wird, um eine ausreichende Schmierung und eine gute Gängigkeit zu gewährleisten.

Wenn das Formschlusselement die Form eines Plättchens, Gleitstücks oder Nutensteins aufweist, sind in der Außenwelle üblicherweise in Umfangsrichtung verlaufende Längsschlitze als Öffnungen vorgesehen.

Wenn eine einfache Kugel oder mehrere Kugeln als Formschlusselemente vorgesehen sind, ist in der Außenwelle ein einfaches, rundes Loch ausreichend, um die Kugel bei der Montage von außen einsetzen zu können. Diese Kugel wirkt dann mit den Rändern des Loches sowie mit einer Vertiefung der Innenwelle zusammen. Die Innenwelle kann insbesondere eine Vertiefung in Form einer kreisbogenförmigen Lauffläche aufweisen, so dass dann die Lagerung nach Art eines Kugellagers erreicht wird. Um die zumindest eine Kugel bzw. die Kugeln in einer vorgegebenen Position zu halten und gegen ein Herausfallen zu sichern, ist bei einer durchgehenden Öffnung in der Außenwelle ein die Kugel begrenzender Ring vorgesehen. Ein weiterer Vorteil dieser Lösung ist zudem, dass der Ring und die Kugel dann auch eine radiale Lagerung der Innenwelle darstellen können.

Gemäß einer alternativen Ausgestaltung ist vorgesehen, dass die Außenwelle ausgehend von dem Ringspalt eine rückspringende Kontur in Form einer Nut aufweist. Die Außenwelle ist im Rahmen einer solchen Ausgestaltung an der Mantelfläche geschlossen, so dass das zumindest eine Formschlusselement bei der Montage von innen in die Nut eingebracht werden muss. Dazu kann insbesondere vorgesehen sein, dass das Formschlusselement an der Innenwelle radial beweglich angeordnet und mit einem elastischen Druckelement beaufschlagt ist. So kann beispielsweise ein Formschlusselement in Form einer Kugel mit einer darunter angeordneten Feder in eine Sackbohrung der Innenwelle eingesetzt sein. Alternativ sind auch zwei gegenüberliegende Kugeln mit einer dazwischen angeordneten Feder möglich.

Bei der Montage werden dann die Kugeln so weit in die Öffnung hinein gedrückt, dass die Innenwelle in die Außenwelle eingeschoben werden kann. Bei Erreichen der Nut werden die Kugeln von der Feder nach außen gedrückt, wodurch die gewünschte Fixierung in axialer Richtung und bei einer geeigneten Konstruktion auch in radialer Richtung erreicht wird. Um eine Abstützung in radialer Richtung zu ermöglichen, müssen bei einer Anordnung mit zwei Kugeln diese voneinander entkoppelt sein. Bei einer Ausgestaltung mit einer durchgehenden Feder muss diese entsprechend in ihrer Mitte an der Innenwelle befestigt sein.

Gemäß einer weiteren Variante weist die Innenwelle an der Stützstelle eine Öffnung auf, wobei auch die Außenwelle an beiden Seiten der Öffnung jeweils ein in Umfangsrichtung verlaufendes Langloch aufweist und wobei ein in die Öffnung eingesetzter Stift als Formschlusselement vorgesehen ist. Anders als bei der einfachen Befestigung der zweiten Nocken mit einem Stift ist hier der Stift für eine präzise axiale Abstützung vorgesehen. Neben einem einfachen runden, zylindrischen Stift ist es auch möglich, dass der Stift an zumindest einem Ende seitlich plane Flächen aufweist, welche zur axialen Abstützung vorgesehen sind. Anstelle einer punkt- bzw. linienförmigen Abstützung wird so eine flächige Abstützung erreicht, wodurch die Verschleißneigung auch bei einem langfristigen Einsatz der Nockenwelle reduziert werden kann.

Bei den verschiedenen beschriebenen Ausgestaltungen kann zusätzlich zu der axialen Abstützung grundsätzlich auch eine radiale Abstützung vorgesehen sein, falls auch in radialer Richtung die Formschlussausformung mit einer entsprechenden radialen Kontaktfläche der ersten Welle zusammenwirkt.

Die Erfindung wird im Folgenden anhand einer lediglich ein Ausführungsbeispiel darstellenden Zeichnung erläutert. Es zeigen:
- **Fig.1a**: einen Längsschnitt durch das Ende einer erfindungsgemäßen verstellbaren Nockenwelle,
- **Fig. 1b**: die Anordnung gemäß der Fig. 1a in einer perspektivischen Ansicht,
- **Fig. 2**: eine alternative Ausgestaltung der Nockenwelle in einem Längsschnitt,
- **Fig. 3a**: eine alternative Ausgestaltung der Nockenwelle in einem Längsschnitt, bei der eine Innenwelle und eine Außenwelle jeweils aus einem Grundkörper bzw. aus einem Innenwellengrundkörper sowie daran befestigten Teilen gebildet sind,
- **Fig. 3b**: eine alternative Detailausgestaltung zu der Fig. 3a,
- **Fig. 4 und 5**: alternative Ausgestaltungen der erfindungsgemäßen Nockenwelle,
- **Fig. 6a**: eine alternative Ausgestaltung der erfindungsgemäßen Nockenwelle in einer Perspektive,
- **Fig. 6b**: eine Darstellung nur der Innenwelle der in Fig. 6a dargestellten Nockenwelle
- **Fig. 7**: die Ansicht auf das Ende der in Fig. 6a dargestellten Nockenwelle,
- **Fig. 8a**: einen Schnitt entlang der Linie A-A der Fig. 7,
- **Fig. 8b**: einen Schnitt entlang der Linie B-B der Fig. 7,
- **Fig. 9a**: eine alternative Ausgestaltung der Nockenwelle in einer Perspektive,
- **Fig. 9b**: die Nockenwelle gemäß der Fig. 9a in einem Querschnitt,
- **Fig. 9c**: einen Längsschnitt entlang der Linie C-C der Fig. 9b,
- **Fig. 10a bis 10c**: eine alternative Ausgestaltung der Nockenwelle in einer Ansicht gemäß den Fig. 9a bis 9c,
- **Fig. 11a bis 11c**: eine alternative Ausgestaltung der Nockenwelle in einer Ansicht gemäß den Fig. 9a bis 9c,
- **Fig. 12**: eine alternative Ausgestaltung der Nockenwelle in einem Längsschnitt,
- **Fig. 13**: eine alternative Ausgestaltung der Nockenwelle in einem Längsschnitt, und
- **Fig. 14**: eine alternative Ausgestaltung der Nockenwelle in einem Längsschnitt.

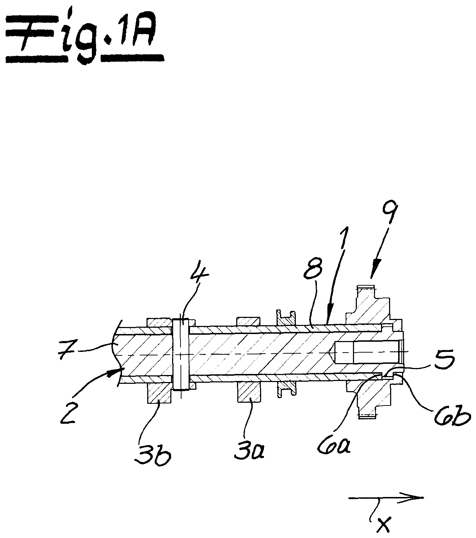

Die Erfindung betrifft eine verstellbare Nockenwelle, die gemäß ihrem grundsätzlichen Aufbau eine erste Welle und eine zweite Welle aufweist, die eine hohle Außenwelle 1 und eine in der hohlen Außenwelle 1 koaxial angeordneten und relativ zur Außenwelle verdrehbar gelagerten Innenwelle 2 bilden. Aus der Fig. 1a ist erkennbar, dass erste Nocken 3a fest an der Außenwelle 1 angeordnet sind, wobei zweite Nocken 3b drehbar auf der Außenwelle 1 angeordnet und an der Innenwelle 2 mit geeigneten Befestigungsmitteln 4, insbesondere Bolzen, befestigt sind. Die Fig. 1a zeigt ein Ende einer solchen Nockenwelle.

Die vorliegende Erfindung beschäftigt sich mit der axialen Lagerung der Außenwelle 1 und der darin verdrehbar gelagerten Innenwelle 2. Bei der axialen Lagerung ist zu berücksichtigen, dass zwischen der Innenwelle 2 und der Außenwelle 1 in axialer Richtung kein Spiel vorhanden sein soll, wobei aber auch eine gleitende, klemmfreie Lagerung erreicht werden soll.

Zu diesem Zweck ist gemäß der vorliegenden Erfindung eine formschlüssige Fixierung und Lagerung in axialer Richtung x vorgesehen. Allgemein sind die erste Welle und die zweite Welle in axialer Richtung x durch eine Formschlussausformung 5 gegeneinander abgestützt, wobei die erste Welle in axialer Richtung auf der einen Seite der Formschlussausformung 5 eine erste Kontaktfläche 6a und auf der anderen Seite der Formschlussausformung 5 eine zweite Kontaktfläche 6b zur drehbeweglichen Abstützung der zweiten Welle über die Formschlussausformung 5 aufweist.

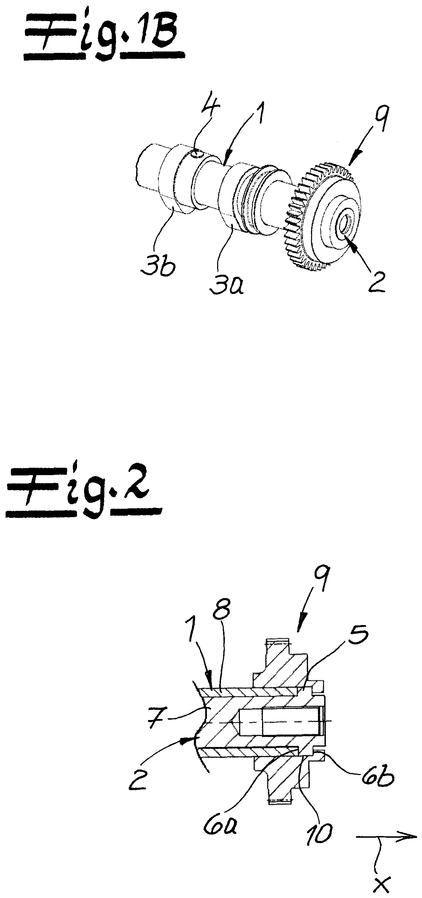

Ausgehend von diesem erfindungsgemäßen Grundprinzip zeigt die Ausgestaltung gemäß den Fig. 1 a und 1b eine Nockenwelle, bei der die Formschlussausformung 5 als umlaufender Vorsprung der Innenwelle 2 gebildet ist. Die Formschlussausformung 5 ist dabei direkt von einem einstückigen Innenwellengrundkörper 7 der Innenwelle 2 gebildet. Auf einem rohrförmigen Grundkörper 8 der Außenwelle 1 ist ein Funktionselement 9 in Form eines Zahnrades zum Antrieb der Nockenwelle fest angeordnet. Das Funktionselement 9 kann mit den üblichen Maßnahmen, beispielsweise Schweißen, Reibschweißen, Löten, Kleben, Schrumpfen, Schrauben, die Erzeugung eines Quer-/Längsverbandes befestigt sein. Je nach Befestigungsart sind unterschiedliche Materialien geeignet, die jedoch den an der Nockenwelle vorliegenden Betriebsstoffen sowie den Temperaturen in einem Verbrennungsmotor standhalten müssen, die Erzeugung eines Formschlusses oder eine Kombination der genannten Maßnahmen.

Gemäß der Fig. 1a ist die Formschlussausformung in Form eines umlaufenden Vorsprunges an der einen Seite an der Stirnfläche des rohrförmigen Grundkörpers 8 der Außenwelle 1 als erste Kontaktfläche 6a abgestützt. Die gegenüberliegende Kontaktfläche 6b wird von einer Fläche des Funktionselementes 9 gebildet. Bei der Herstellung wird zunächst die Innenwelle 2 in den Grundkörper 8 der Außenwelle 1 eingeschoben, bevor dann das Funktionselement 9 an dem Grundkörper 8 der Außenwelle 1 befestigt wird. Dabei kann in axialer Richtung eine Kraft auf das Funktionselement 9 ausgeübt werden, welche einerseits eine Minimierung des Spiels zwischen der Formschlussausformung 5 und den Kontaktflächen 6a, 6b sowie andererseits eine leichte Drehbarkeit der Innenwelle 2 gegenüber der Außenwelle 1 ermöglicht.

Die Fig. 2 zeigt eine Abwandlung der in der Fig. 1a dargestellten Ausführung, wobei der Innendurchmesser des Funktionselementes 9 im Bereich der Formschlussausformung 5 an den Außendurchmesser der Formschlussausformung 5 derart angepasst ist, dass zusätzlich auch eine radiale Kontaktfläche 10 zur Bildung eines radialen Lagers bereitgestellt wird. Denkbar ist auch eine radiale Abstützung der Innenwelle 2 am Innendurchmesser der Außenwelle 1. Hier wurde der Vorsprung des Funktionselementes 9, der die Fläche 6b ausbildet, auf die Innenwelle einwirken (vgl. Fig. 1a).

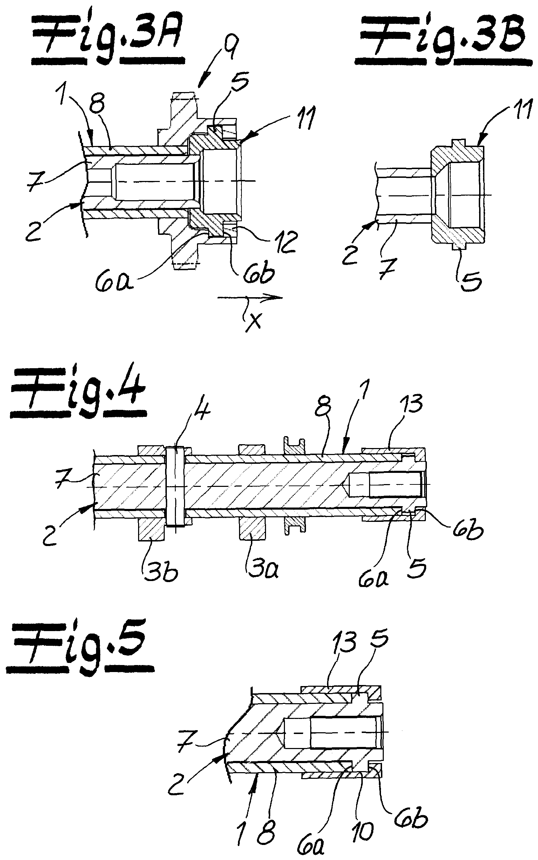

Die Fig. 3a und 3b zeigen eine alternative Ausgestaltung, bei der die Formschlussausformung 5 nicht an dem Grundkörper 8 der Innenwelle 2 sondern an einem zusätzlichen Innenwellenendstück 11 der Innenwelle 2 vorgesehen ist, welches wenigstens axialfest mit dem Innenwellengrundkörper 7 verbunden ist. Gemäß den in Fig. 3a und 3b dargestellten Varianten kann das Innenwellenendstück 11 entweder an dem Außenumfang des Innenwellengrundkörpers 7 (Fig. 3a) oder an einer Stirnfläche des Innenwellengrundkörpers (Fig. 3b) befestigt sein. Der Innenwellengrundkörper 7 kann entweder ein massiver Stab oder auch ein Rohr sein. Bei einer Ausgestaltung als Rohr ergibt sich der Vorteil, dass auch noch weitere Einrichtungen, beispielsweise eine Ölzuführung für den Phaser, in die Nockenwelle integriert werden können. Darüber hinaus ergibt sich eine Gewichtsreduzierung.

Bei den Fig. 3a und 3b ist im Unterschied zu der Ausgestaltung gemäß der Fig. 1a die erste Kontaktfläche 6a von dem Funktionselement 9 gebildet, während zur Bereitstellung der zweiten Kontaktfläche 6b ein separater Endring 12 in das Funktionselement 9 eingesetzt und an dem Funktionselement 9 befestigt ist. Aus Gründen der Übersichtlichkeit sind in der Fig. 3b die entsprechenden Teile der Außenwelle 1 nicht dargestellt.

Die Fig. 4 und 5 zeigen eine weitere Ausgestaltung bei der anstelle eines Funktionselementes 9 eine einfache Hülse 13 vorgesehen ist, welche die zweite Kontaktfläche 6b bereitstellt. Wie auch zuvor im Zusammenhang mit den Fig. 1a und 2 erläutert, kann die Formschlussausformung 5 lediglich zur axialen Abstützung (Fig. 4) oder zusätzlich auch zu einer radialen Abstützung (Fig. 5) vorgesehen sein, wenn der Außendurchmesser an der Formschlussausformung 5 an den Innendurchmesser der Hülse 13 in dem entsprechenden Bereich angepasst ist. Eine radiale Abstützung ist auch zwischen dem die zweite Kontaktfläche 6b bildenden Vorsprung der Hülse 13 und der Innenwelle 2 möglich.

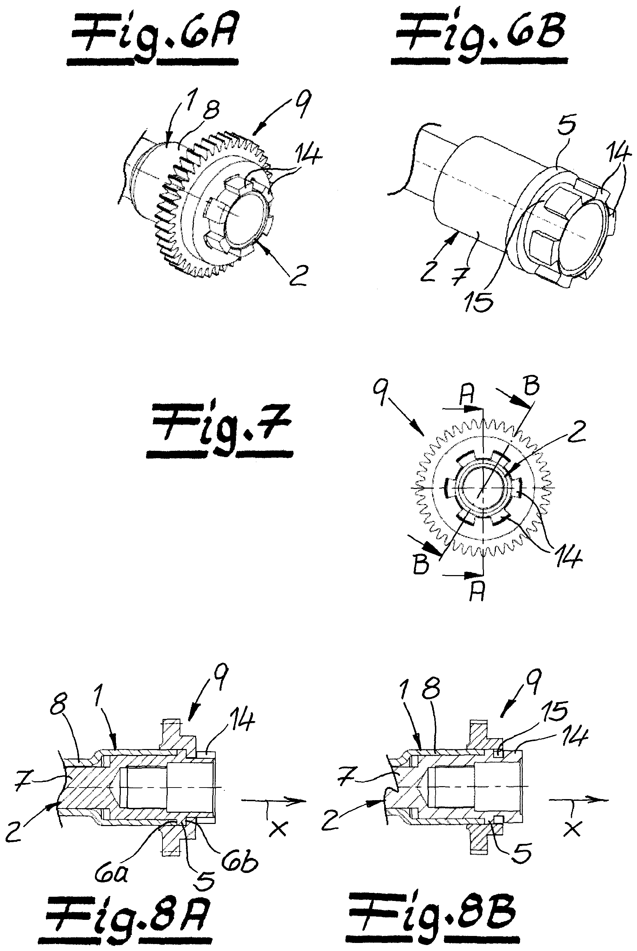

Bei den zuvor beschriebenen konkreten Ausgestaltungen kann bei der Herstellung zunächst die Innenwelle 2 in den Grundkörper 8 der Außenwelle 1 eingeschoben, bevor nachfolgend das Funktionselement 9 (Fig. 1a und Fig. 2), der Endring 12 (Fig. 3a) oder die Hülse 13 (Fig. 4 und Fig. 5) aufgesetzt und mit dem Grundkörper 8 der Außenwelle 1 verbunden wird. Die Ausgestaltung gemäß Fig. 6a, 6b, 7, 8a und 8b beruht auf dem gleichen Ansatz, wobei zur Erhöhung des Außendurchmessers der Innenwelle 2 eine Art Verzahnung vorgesehen ist. Die an der Innenwelle 2 gebildeten Zähne 14 werden bei der Montage durch Freiräume des Funktionselementes 9 geführt, wobei die Freiräume lediglich ein zur Montage notwendiges Übermaß aufweisen. Um aber nach der festen Verbindung des Funktionselementes 9 mit dem Grundkörper 8 der Außenwelle 1 eine Verdrehung der Innenwelle 2 gegenüber der Außenwelle 1 zu ermöglichen, ist gemäß der Fig. 6b, welche lediglich die Innenwelle 2 zeigt, zwischen den Zähnen 14 und der Formschlussausformung 5 eine umlaufende Aussparung 15 vorgesehen. Die axiale Abstützung der Formschlussausformung erfolgt gemäß der Fig. 8a ähnlich wie bei der Ausgestaltung gemäß der Fig. 1a an der Stirnfläche des Grundkörpers 8 der Außenwelle 1 als erste Kontaktfläche sowie an einer zweiten von dem Funktionselement 9 gebildeten Kontaktfläche 6b. Aus einer vergleichenden Betrachtung der Fig. 6a und 6b ist ersichtlich, dass die zweite Kontaktfläche 6b an den Freiräumen unterbrochen ist.

Insbesondere aus den Fig. 8a und 8b ist zusätzlich erkennbar, dass der rohrförmige Grundkörper 8 der Außenwelle 1 eine Durchmessererweiterung aufweist. Neben der Aufweitung des Grundkörpers 8 kommt für eine Durchmessererweiterung auch eine mehrstückige Ausgestaltung in Betracht.

Während bei den bisher beschriebenen Ausgestaltungen die Formschlussausformung 5 in dem Bereich eines Wellenendes der Nockenwelle anzuordnen ist, betreffen die nachfolgenden Erläuterungen Ausgestaltungen, bei denen die Stützstelle für die axiale Abstützung an einer beliebigen Stelle der Nockenwelle erfolgen kann. Aus praktischen Gründen erfolgt aber auch hier die Abstützung in axialer Richtung vorzugsweise zumindest in der Nähe eines Endes der Nockenwelle.

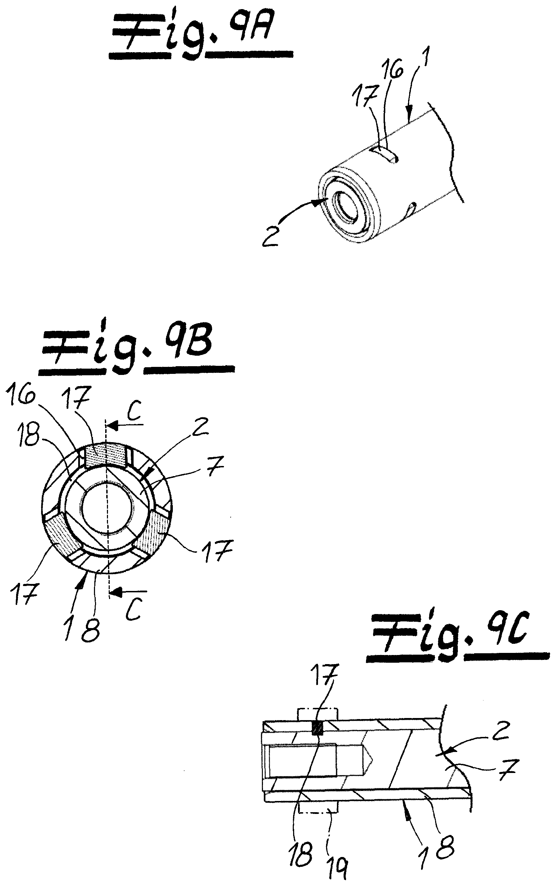

Gemäß der Fig. 9a weist die Außenwelle 1 Öffnungen in Form von Langlöchern 16 auf. In diesen Langlöchern 16 sind separate Formschlusselemente 17 als Formschlussausformung 5 vorgesehen. Einer vergleichenden Betrachtung der Fig. 9b und 9c ist zu entnehmen, dass die Innenwelle 2 eine Umfangsnut 18 aufweist, in welche die drei in einer regelmäßigen Winkelteilung um den Umfang angeordneten Formschlusselement 17 eingreifen. Durch die Formschlusselemente 17 ist eine präzise axiale Lagerung möglich, wobei die Innenwelle 2 gegenüber der Außenwelle 1 drehbar bleibt. Um die Formschlusselemente 17 gegen Verschmutzungen und/oder ein Herausfallen zu sichern, kann ein Ring 19 vorgesehen sein, der an der Außenwelle 1 die Formschlusselemente 17 verdeckt. Der optionale Ring 19 ist in der Fig. 9c angedeutet.

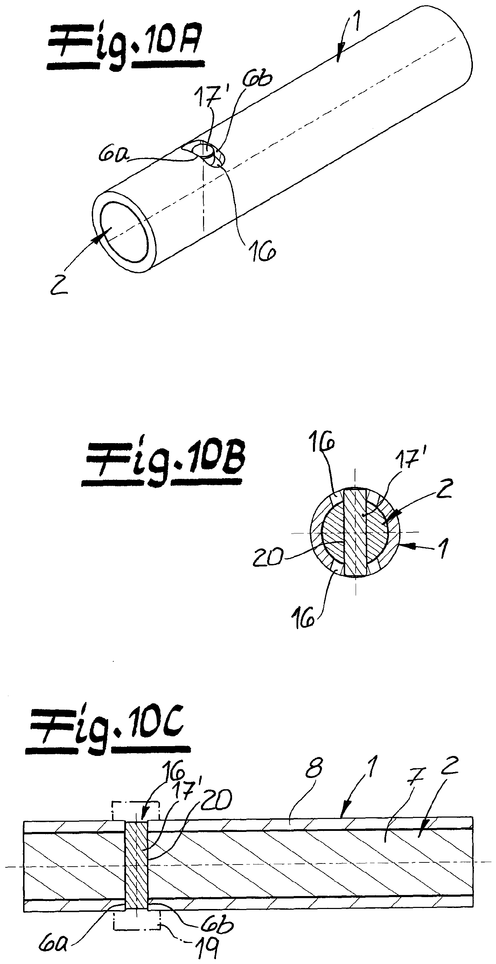

Die Fig. 10a bis 10c zeigen eine Ausgestaltung, bei der die Innenwelle 2 an der Stützstelle eine Öffnung 20 aufweist, in die ein Formschlusselement 17' in Form eines Stiftes eingesetzt ist. Im Bereich der Öffnung 20 weist die Außenwelle 1 Langlöcher 16 auf, um eine Bewegung des Formschlusselementes 17' bei einer Verstellung der Innenwelle 2 gegenüber der Außenwelle 1 zu ermöglichen. Bei einem einfachen, kreiszylindrischen Stift als Formschlusselement 17' ergibt sich ein linienförmiger Kontakt zwischen diesem Formschlusselement 17' und den beiden Kontaktflächen 6a, 6b, welche von den Rändern der Langlöcher 16 gebildet werden.

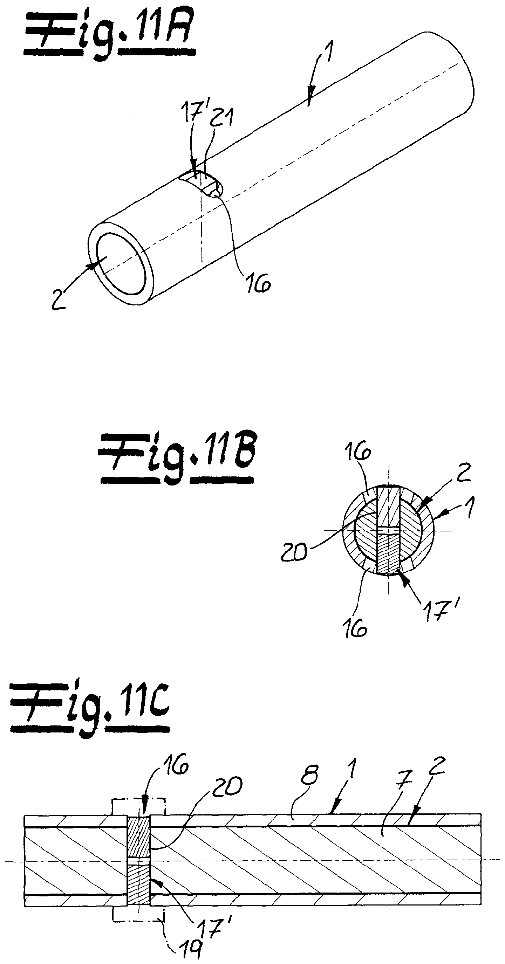

Um davon ausgehend den Verschleiß zu reduzieren, kann gemäß der Fig. 11a bis 11c ein Formschlusselement 17' in Form eines Stiftes vorgesehen sein, der an einem Kopf 21 seitlich plane Flächen aufweist.

Auch bei den Ausführungsformen der Fig. 10a bis 10c sowie Fig. 11a bis 11 c kann zum Schutz und zur Vermeidung eines erhöhten Ölverlustes ein Ring 19 vorgesehen sein.

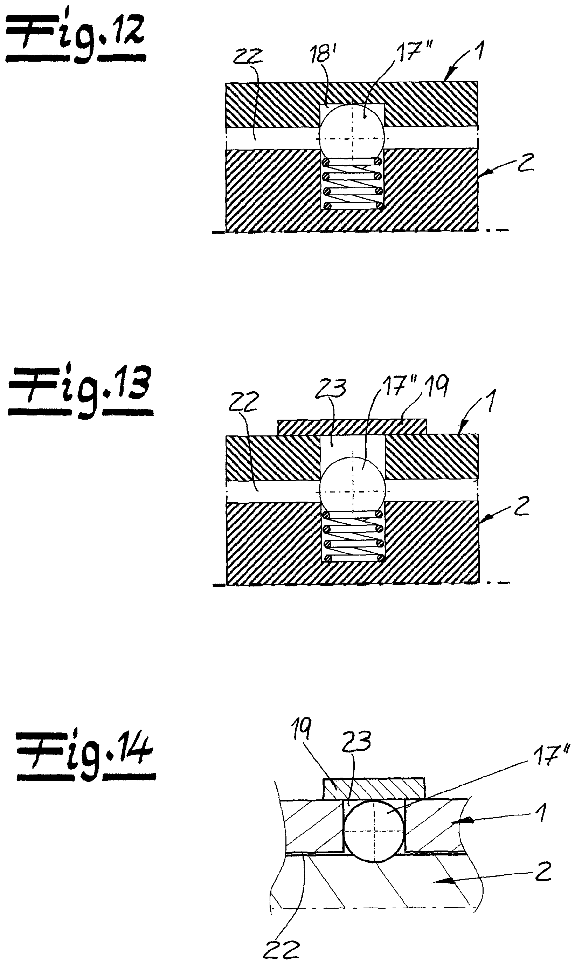

Die Fig. 12 zeigt schließlich eine Ausgestaltung, bei der ein separates Formschlusselement 17" in Form einer Kugel vorgesehen ist, wobei die Außenwelle 1 lediglich eine innen liegende Umfangsnut 18' aufweist. Die Kugel als Formschlusselement 17" ist dadurch im Bereich eines Ringspaltes 22 zwischen Innenwelle 2 und Außenwelle 1 optimal gegen Einflüsse von außen geschützt, wobei im Bereich der Abstützung auch kein Öl verloren gehen kann. Allerdings ist die Erzeugung der innen liegenden Umfangsnut 18' innerhalb der Außenwelle 1 mit einem erhöhten Aufwand verbunden.

Vor diesem Hintergrund zeigt die Fig. 13 eine alternative Ausgestaltung, bei der anstelle der Umfangsnut 18' ein Langloch 16 in der Außenwelle vorgesehen ist. Das Langloch 16 ermöglicht das Verdrehen der Innenwelle 2 gegenüber der Außenwelle 1. Um hier eine Öldichtheit zu gewährleisten, ist ein Ring 19 als Abdeckung vorgesehen.

Schließlich zeigt die Fig. 14 eine Weiterbildung der zuvor beschriebenen Ausgestaltung, bei der zumindest eine, vorzugsweise mehrere Kugeln, als Formschlusselement 17" bzw. als Formschlusselemente 17" vorgesehen sind. Die Kugeln sind in Bohrungen 23 der Außenwelle 1 angeordnet. Die Innenwelle weist eine vorzugsweise umlaufende Nut zur Aufnahme der Kugel auf.

Bei dieser Weiterbildung dient der Ring 19 als Gegenlager der Kugel und kann darüber hinaus eine Öldichtheit gewährleisten.

## Patentansprüche

1. Nockenwelle, insbesondere für Kraftfahrzeugmotoren,
mit einer ersten Welle und einer zweiten Welle, die eine hohle Außenwelle (1) und eine koaxial in der Außenwelle (1) angeordnete und gegenüber der Außenwelle (1) verdrehbare Innenwelle (2) bilden,
mit ersten an der Außenwelle (1) drehfest angeordneten Nocken (3a) und
mit zweiten Nocken (3b), die drehbar auf der Außenwelle (1) angeordnet und an der Innenwelle (2) befestigt sind,
**dadurch gekennzeichnet, dass** die erste Welle und die zweite Welle in axialer Richtung durch eine Formschlussausformung (5) gegeneinander abgestützt sind, wobei die erste Welle in axialer Richtung (x) gesehen auf der einen Seite der Formschlussausformung (5) eine erste Kontaktfläche (6a) und auf der anderen Seite der Formschlussausformung (5) eine zweite Kontaktfläche (6b) zur drehbeweglichen Abstützung der zweiten Welle über die Formschlussausformung (5) aufweist.

2. Nockenwelle nach Anspruch 1, **dadurch gekennzeichnet, dass** die Formschlussausformung (5) Bestandteil der zweiten Welle ist.

3. Nockenwelle nach Anspruch 1 oder 2, **dadurch gekennzeichnet, dass** sich die Innenwelle (2) an einem Nockenwellenende über einen rohrförmigen Grundkörper (8) der Außenwelle (1) hinauserstreckt und dort die Formschlussausformung (5) aufweist, die über den Innendurchmesser des Grundkörpers (8) in radialer Richtung vorsteht.

4. Nockenwelle nach Anspruch 3, **dadurch gekennzeichnet, dass** die Formschlussausformung (5) sich in axialer Richtung (x) an der einen Seite an einer Stirnfläche des Grundkörpers (8) und an der Seite an einem axialfest mit dem Grundkörper (8) verbundenen Teil der Außenwelle (1) abstützt.

5. Nockenwelle nach Anspruch 3, **dadurch gekennzeichnet, dass** sich die Formschlussausformung (5) in axialer Richtung (x) gesehen an beiden Seiten an Kontaktflächen (6a, 6b) eines axialfest mit dem Grundkörper (8) verbundenen Teils oder an Kontaktflächen (6a, 6b) von zwei axialfest mit dem Grundkörper (8) verbundenen Teilen der Außenwelle (1) abstützt.

6. Nockenwelle nach Anspruch 4 oder 5, **dadurch gekennzeichnet, dass** das Teil bzw. zumindest eines der Teile der Außenwelle (1) ein Funktionselement (9) der Nockenwelle ist.

7. Nockenwelle nach einem der Ansprüche 4 bis 6, **dadurch gekennzeichnet, dass** das Teil bzw. zumindest eines der Teile der Außenwelle (1) durch eine formschlüssige und/oder stoffschlüssige und/oder kraftschlüssige Verbindung an dem Grundkörper (8) befestigt ist.

8. Nockenwelle nach einem der Ansprüche 1 bis 7, **dadurch gekennzeichnet, dass** die Innenwelle (2) einen rohr- oder stabförmigen Innenwellengrundkörper (7) sowie ein Innenwellenendstück (11) aufweist, wobei die Formschlussausformung (5) an dem Innenwellenendstück (11) gebildet ist.

9. Nockenwelle nach einem der Ansprüche 1 bis 8, **dadurch gekennzeichnet, dass** die Formschlussausformung (5) sich auch in radialer Richtung an der ersten Welle abstützt.

10. Nockenwelle nach Anspruch 1, **dadurch gekennzeichnet, dass** die Innenwelle (2) und die Außenwelle (1) an einer Stützstelle ausgehend von einem Ringspalt (22) zwischen Innenwelle (2) und Außenwelle (1) jeweils eine zurückspringende Kontur in Form einer Vertiefung, Umfang (s) Nut (18, 18') oder Öffnung (20) aufweisen, wobei als Formschlussausformung (5) zumindest ein in diese rückspringende Kontur eingreifendes, separates Formschlusselement (17, 17', 17") vorgesehen ist.

11. Nockenwelle nach Anspruch 10, **dadurch gekennzeichnet, dass** an der Stützstelle die Außenwelle (1) zumindest eine Öffnung und die Innenwelle (2) eine Umfangsnut (18) aufweist, wobei zumindest ein Formschlusselement (17, 17") in die Öffnung eingesetzt ist und die Umfangsnut (18) eingreift.

12. Nockenwelle nach Anspruch 11, **dadurch gekennzeichnet, dass** die zumindest eine Öffnung der Außenwelle ein in Umfangsrichtung verlaufendes Längsloch (16) ist.

13. Nockenwelle nach Anspruch 11, **dadurch gekennzeichnet, dass** als Formschlusselement (17") eine Kugel vorgesehen ist.

14. Nockenwelle nach Anspruch 10, **dadurch gekennzeichnet, dass** die Außenwelle (1) ausgehend von dem Ringspalt (22) eine zurückspringende Kontur in Form einer Umfangsnut (18') aufweist, wobei das Formschlusselement (17") an der Innenwelle (2) radial beweglich angeordnet und mit einem elastischen Druckelement beaufschlagt ist.

15. Nockenwelle nach Anspruch 10, **dadurch gekennzeichnet, dass** die Innenwelle (2) an der Stützstelle eine Öffnung (20) aufweist und dass die Außenwelle (1) an beiden Seiten der Öffnung (20) jeweils ein in Umfangsrichtung verlaufendes Langloch (16) aufweist, wobei ein in die Öffnung eingesetzter Stift als Formschlusselement (17') vorgesehen ist.

16. Nockenwelle nach Anspruch 15, **dadurch gekennzeichnet, dass** der Stift an zumindest einem Ende seitlich plane Flächen aufweist.

## Claims

1. A camshaft, in particular for motor vehicle engines,
with a first shaft and a second shaft, which form a hollow outer shaft (1) and an inner shaft (2) arranged coaxially within the outer shaft (1), and which can rotate relative to the outer shaft (1),
with first cams (3a) arranged in a torque-proof manner on the outer shaft (1), and
with second cams (3b), arranged on the outer shaft (1) such that they can rotate, and fixed to the inner shaft (2),
**characterised in that**
the first shaft and the second shaft are supported against each other in the axial direction by a positive-locking element (5), wherein as seen in the axial direction (x) the first shaft on the one side of the positive-locking element (5) has a first contact surface (6a), and on the other side of the positive-locking element (5) has a second contact surface (6b) for purposes of providing rotating support to the second shaft by way of the positive-locking element (5).

2. The cam shaft in accordance with claim 1, **characterised in that** the positive-locking element (5) is a component of the second shaft.

3. The cam shaft in accordance with claim 1 or 2, **characterised in that** the inner shaft (2) extends beyond a tubular base body (8) of the outer shaft (1) at one end of the camshaft, and there has the positive-locking element (5), which protrudes beyond the inner diameter of the base body (8) in the radial direction.

4. The cam shaft in accordance with claim 3, **characterised in that** on one side the positive-locking element (5) is supported in the axial direction (x) on an end face of the main body (8), and on the other side on a part of the outer shaft (1) that is axially fixed to the main body (8).

5. The cam shaft in accordance with claim 3, **characterised in that** as seen in the axial direction (x) the positive-locking element (5) is supported on both sides on contact surfaces (6a, 6b) of a part axially fixed to the base body (8), or on contact surfaces (6a, 6b) of two parts of the outer shaft (1) axially fixed to the base body (8).

6. The cam shaft in accordance with claim 4 or 5, **characterised in that** the part, or at least one of the parts, of the outer shaft (1), is a functional element (9) of the camshaft.

7. The cam shaft in accordance with one of the claims 4 to 6, **characterised in that** the part, or at least one of the parts of the outer shaft (1), is fixed by means of a positive-lock, and/or bonded, and/or force-fit, connection to the base body (8).

8. The cam shaft in accordance with one of the claims 1 to 7, **characterised in that** the inner shaft (2) has a tubular or rod-shaped inner shaft base body (7) and an inner shaft end piece (11), wherein the positive-locking element (5) is formed on the inner shaft end piece (11).

9. The cam shaft in accordance with one of the claims 1 to 8, **characterised in that** the positive-locking element (5) is also supported on the first shaft in the radial direction.

10. The cam shaft in accordance with claim 1, **characterised in that** at a support point originating from an annular gap (22) between inner shaft (2) and outer shaft (1), the inner shaft (2) and outer shaft (1) each have a recessed contour in the form of a recess, circumference (s) groove (18, 18') or opening (20), wherein at least one separate form-fit element (17, 17', 17"), engaging in this recessed contour, is provided as a positive-locking element (5).

11. The cam shaft in accordance with claim 10, **characterised in that** at the support point, the outer shaft (1) has at least one opening, and the inner shaft (2) has a circumferential groove (18), wherein at least one positive-locking element (17, 17") is inserted into the opening and engages with the circumferential groove (18).

12. The cam shaft in accordance with claim 11, **characterised in that** the at least one opening of the outer shaft is an elongated hole (16) extending in the circumferential direction.

13. The cam shaft in accordance with claim 11, **characterised in that** a ball is provided as a positive-locking element (17").

14. The cam shaft in accordance with claim 10, **characterised in that** originating from the annular gap (22), the outer shaft (1) has a recessed contour in the form of a circumferential groove (18'), wherein the positive-locking element (17") on the inner shaft (2) is arranged such that it can move radially, and is acted upon by an elastic pressure element.

15. The cam shaft in accordance with claim 10, **characterised in that** the inner shaft (2) has an opening (20) at the support point, and **in that** the outer shaft (1) has on either side of the opening (20) an elongated hole (16) extending in the circumferential direction, wherein a pin inserted into the opening is provided as a positive-locking element (17').

16. The cam shaft in accordance with claim 15, **characterised in that** on at least one end the pin has laterally planar surfaces.

## Revendications

1. Arbre à cames, en particulier pour des moteurs de véhicules automobiles, comprenant
un premier arbre et un deuxième arbre formant un arbre extérieur creux (1) et un arbre intérieur (2) disposé coaxialement dans l'arbre extérieur (1) et apte à tourner par rapport à l'arbre extérieur (1),
des premières cames (3a) disposées fixes en rotation sur l'arbre extérieur (1), et
des deuxièmes cames (3b) disposées de façon rotative sur l'arbre extérieur (1) et fixées sur l'arbre intérieur (2),
**caractérisé en ce que** le premier arbre et le deuxième arbre s'appuient l'un contre l'autre dans la direction axiale à l'aide d'une formation à complémentarité de forme (5), le premier arbre présentant une première surface de contact (6a) sur un côté de la formation à complémentarité de forme (5) vu dans la direction axiale (x), et une deuxième surface de contact (6b) sur l'autre côté de la formation à complémentarité de forme (5) pour l'appui mobile en rotation du deuxième arbre par le biais de la formation à complémentarité de forme (5).

2. Arbre à cames selon la revendication 1, **caractérisé en ce que** la formation à complémentarité de forme (5) fait partie du deuxième arbre.

3. Arbre à cames selon la revendication 1 ou 2, **caractérisé en ce que** l'arbre intérieur (2) s'étend au-delà d'un corps de base tubulaire (8) de l'arbre extérieur (1) à une extrémité de l'arbre à cames, où il présente la formation à complémentarité de forme (5), laquelle fait saillie au-delà du diamètre intérieur du corps de base (8) dans la direction radiale.

4. Arbre à cames selon la revendication 3, **caractérisé en ce que** la formation à complémentarité de forme (5) s'appuie dans la direction axiale (x) d'un côté sur une surface frontale du corps de base (8) et de l'autre côté sur une pièce de l'arbre extérieur (1) reliée fixement dans le sens axial au corps de base (8).

5. Arbre à cames selon la revendication 3, **caractérisé en ce que** la formation à complémentarité de forme (5) sur dans la direction axiale (x) s'appuie des deux côtés sur des surfaces de contact (6a, 6b) d'une pièce reliée fixement dans le sens axial au corps de base (8) ou sur des surfaces de contact (6a, 6b) de deux pièces de l'arbre extérieur (1) reliées fixement dans le sens axial au corps de base (8).

6. Arbre à cames selon la revendication 4 ou 5, **caractérisé en ce que** la partie ou du moins l'une des pièces de l'arbre extérieur (1) est un élément fonctionnel (9) de l'arbre à cames.

7. Arbre à cames selon l'une des revendications 4 à 6, **caractérisé en ce que** la pièce ou du moins l'une des pièces de l'arbre extérieur (1) est fixée au corps de base (8) par un assemblage par complémentarité de forme et/ou par liaison de matière et/ou à force.

8. Arbre à cames selon l'une des revendications 1 à 7, **caractérisé en ce que** l'arbre intérieur (2) présente un corps de base d'arbre intérieur en forme de tube ou de tige (7) ainsi qu'une partie terminale d'arbre intérieur (11), la formation à complémentarité de forme (5) étant formée sur la partie terminale d'arbre intérieur (11).

9. Arbre à cames selon l'une des revendications 1 à 8, **caractérisé en ce que** la formation à complémentarité de forme (5) s'appuie sur le premier arbre également dans la direction radiale.

10. Arbre à cames selon la revendication 1, **caractérisé en ce que** l'arbre intérieur (2) et l'arbre extérieur (1) présentent respectivement un contour évidé sous la forme d'un renfoncement, d'une rainure périphérique (18, 18') ou d'une ouverture (20) sur un point d'appui à partir d'une fente annulaire (22) entre l'arbre intérieur (2) et l'arbre extérieur (1), dans lequel au moins un élément à complémentarité de forme séparé (17, 17', 17") s'engageant dans ce contour évidé est prévu en tant que formation à complémentarité de forme (5).

11. Arbre à cames selon la revendication 10, **caractérisé en ce que** sur le point d'appui, l'arbre extérieur (1) présente au moins une ouverture et l'arbre intérieur (2) présente une rainure périphérique (18), dans lequel au moins un élément à complémentarité de forme (17, 17") est inséré dans l'ouverture et s'engage dans la rainure périphérique (18).

12. Arbre à cames selon la revendication 11, **caractérisé en ce que** l'au moins une ouverture de l'arbre extérieur est un trou oblong (16) s'étendant dans la direction périphérique.

13. Arbre à cames selon la revendication 11, **caractérisé en ce qu'**une bille est prévue en tant qu'élément à complémentarité de forme (17").

14. Arbre à cames selon la revendication 10, **caractérisé en ce que** l'arbre extérieur (1) présente un contour évidé sous la forme d'une rainure périphérique (18') à partir de la fente annulaire (22), dans lequel l'élément à complémentarité de forme (17") est disposé de façon radialement mobile sur l'arbre intérieur (2) et sollicité par un élément de pression élastique.

15. Arbre à cames selon la revendication 10, **caractérisé en ce que** l'arbre intérieur (2) présente une ouverture (20) sur le point d'appui, et **en ce que** des deux côtés de l'ouverture (20), l'arbre extérieur (1) présente respectivement un trou oblong (16) s'étendant dans la direction périphérique, dans lequel une tige insérée dans l'ouverture est prévue en tant qu'élément à complémentarité de forme (17').

16. Arbre à cames selon la revendication 15, **caractérisé en ce que** la tige présente des surfaces latérales planes à au moins une extrémité.
